# EUROPÄISCHE PATENTSCHRIFT

(11) **EP 2 507 527 B1**
(45) Veröffentlichungstag und Bekanntmachung des Hinweises auf die Patenterteilung: **25.06.2014**
(21) Anmeldenummer: 10781519.3
(22) Anmeldetag: 25.11.2010
(51) Int. Cl.: F16C 27/04, F16C 37/00

(54) **WÄLZLAGERANORDNUNG**
ROLLING BEARING ARRANGEMENT
AGENCEMENT DE PALIER DE ROULEMENT

(30) Priorität: 02.12.2009 DE 102009056662
(43) Veröffentlichungstag der Anmeldung: 10.10.2012
(73) Patentinhaber: Schaeffler Technologies GmbH & Co. KG, 91074 Herzogenaurach (DE)
(72) Erfinder: GLÖCKNER, Peter, 97424 Schweinfurt (DE); KAISER, Andreas, 97440 Werneck (DE)
(86) Internationale Anmeldenummer: PCT/EP2010/068176
(87) Internationale Veröffentlichungsnummer: WO 2011/067154

(56) Entgegenhaltungen:
- DE-A1- 3 604 625
- DE-A1- 10 322 631
- GB-A- 2 111 136
- US-A- 3 698 777
- US-A- 3 844 630
- US-A- 4 669 893

## Beschreibung

### Gebiet der Erfindung

Die Erfindung liegt auf dem Gebiet von Hochleistungs-Wälzlagern, insbesondere zur Anwendung bei Triebswerklagerungen oder Hauptwellenlagerungen in hochdrehenden Gasturbinen, Getrieben sowie beispielsweise für Rotorlagerungen in Hubschraubern.

Bei derartigen Einsatzfällen von Wälzlagern entstehen in einem Kontaktbereich zwischen Wälzkörpern und Lagerringen solcher Lager aufgrund sehr hoher Betriebsdrehzahlen bei äußerst hohen Belastungen leicht Betriebstemperaturen von weit über 200°C. Die bei den hohen Umdrehungszahlen durch Reibleistung entstehende Wärme muss zur Vermeidung von Lagerschäden zuverlässig und zügig abgeführt werden. Dazu werden Wälzlager-Kühlsysteme eingesetzt.

Aus der DE 10 2006 024 603 A1 ist ein Kühlsystem für einen derartigen Einsatzfall bekannt. An einer äußeren Mantelfläche eines Außenrings eines solchen Wälzlagers sind mehrere Ausnehmungen für den Durchfluss eines Kühlmittels eines Kühlmittelsystems vorgesehen. Damit wird die aufgrund der Reibleistung bei den außerordentlich hohen Umdrehungszahlen zwischen Wälzlageraußenring und Wälzkörpern erzeugte Wärme abgeführt. Gleichzeitig treten bei beschriebenen Einsatzfällen von Hochleistungs-Wälzlagern auch axiale und radiale Schwingungen auf, welche unter Umständen störend einen Betrieb des Wälzlagers beeinflussen. Aus derartigen Situationen können, u.a. bedingt durch eine durch die radialen Schwingungen hervorgerufene Verdrehung des Wälzlagers gegen ein Gehäuse oder Anlaufen des Wälzlagers an ein Gehäuseteil, Schädigungen bis hin zur Zerstörung des Wälzlagers erwachsen.

Um einer schwingungsbedingte Schädigung entgegen zu wirken, sind heutige Wälzlager bzw. Lagersysteme z.B. mit entsprechenden Dämpfungssystemen ausgestattet, mittels welcher betriebsbedingte Schwingungen des Wälzlagers abgedämpft werden.

Bei derartigen bekannten Dämpfungssystemen handelt es sich mitunter um technisch aufwendige Lösungen, bei denen eine Dämpfung über eine bisweilen recht komplexe Anordnung von mechanischen Dämpfungselementen realisiert ist.

Aus der DE 10 2008 032 921 A1 ist ein weiteres Dämpfungssystem für ein Wälzlager bekannt. Dieses bekannte Wälzlager mit Dämpfungssystem weist einen einen Hohlraum ausbildenden Gehäuseteil und ein in dem Hohlraum eingesetztes Lagermodul auf, welches einen Lageraußenring und einen darin angeordneten, um eine Drehachse relativ zum Lageraußenring drehbar gelagerten Lagerinnenring umfasst. Hierbei ist es vorgesehen, dass der Lageraußenring entlang einer Außenkontur passgenau bis auf einen umlaufenden Spalt zur Hohlraumwandung in den Hohlraum eingesetzt ist, wobei die Außenkontur des Lageraußenrings und die Hohlraumwandung zueinander verdrehsicher ausgebildet sind und wobei der Spalt mit einer hochviskosen Dämpfungsflüssigkeit angefüllt ist.

Verschiedene Ausgestaltungen dieser in diesem Fall berührungslosen Verdrehsicherung von Lageraußenring und Hohlraumwandung bzw. Gehäuseteil durch Formgebung werden in der DE 10 2008 032 921 A1 diskutiert. Andere Arten von Verdrehsicherungen bei Wälzlagern im Allgemeinen, z.B. mechanische Verdrehsicherungen, sind bekannt.

Vor diesem Hintergrund besteht die Aufgabe der vorliegenden Erfindung darin, ein Wälzlager zu schaffen, das genannten Anforderungen an eine effektive Kühlung sowie Dämpfung gerecht wird sowie konstruktiv einfach und kostengünstig herstellbar ist.

Diese Aufgabe wird erfindungsgemäß gelöst durch eine Wälzlageranordnung gemäß dem unabhängigen Patentanspruch.

Diese Wälzlageranordnung weist zumindest einen Wälzlageraußenring eines Wälzlagers, ein Zwischenelement und ein Gehäuseteil auf, wobei das Wälzlager derart in das Gehäuseteil einsetzbar ist, dass das Zwischenelement zwischen dem Wälzlageraußenring und dem Gehäuseteil angeordnet ist, wobei sich zwischen dem Wälzlageraußenring und dem Zwischenelement eine erste Kontaktzone und sich zwischen dem Zwischenelement und dem Gehäuseteil eine zweite Kontaktzone ausbildet.

An der ersten Kontaktzone ist ein Kühlsystem ausgebildet, wobei das Kühl-system mindestens eine mit einem Kühlmittel durchströmbare Kühlausnehmung, insbesondere einen Kühlkanal, aufweist.

An der zweiten Kontaktzone ist ein Dämpfungssystem ausgebildet, wobei das Dämpfungssystem mindestens eine Dämpfungsausnehmung aufweist, über welche ein Dämpfungshohlraum, z.B. ein Spalt, in der zweiten Kontaktzone mit einem Dämpfungsmedium befüllbar ist.

Bei einem Zwischenelement für eine solche Wälzlageranordnung, welches zwischen einem Wälzlageraußenring und einem Gehäuseteil angeordnet werden kann, ist zwischen dem Wälzlageraußenring und dem Zwischenelement eine erste Kontaktzone und zwischen dem Zwischenelement und dem Gehäuseteil eine zweite Kontaktzone ausbildbar.

An der ersten Kontaktzone ist ein Kühlsystem ausgebildet, wobei das Kühl-system mindestens eine mit einem Kühlmittel durchströmbare, an dem Zwischenelement angeordnete Kühlausnehmung, insbesondere einen Kühlkanal, aufweist.

An der zweiten Kontaktzone ein Dämpfungssystem ausgebildet, wobei das Dämpfungssystem mindestens eine an dem Zwischenelement angeordnete Dämpfungsausnehmung aufweist, über welche ein Dämpfungshohlraum, z.B. Spalt, in der zweiten Kontaktzone mit einem Dämpfungsmedium befüllbar ist.

Ein wesentlicher Vorteil der Erfindung besteht darin, dass zwei unterschiedliche Funktionen, die Kühlung sowie die Dämpfung eines Wälzlagers, auf einfache Weise realisiert werden können. Insbesondere durch Verwendung des erfindungsgemäßen Zwischenelements kann ein integriertes, kombiniertes Kühl-Dämpfungssystem bei einem Wälzlager erreicht werden.

Darüber hinaus besteht ein Vorteil der Erfindung darin, dass - im Funktionsbereich der Dämpfung - durch die erfindungsgemäß vorgesehene Dämpfungsausnehmung eine gleichmäßige Verteilung des Dämpfungsmediums, z.B. einer hochviskosen Flüssigkeit wie ein entsprechendes Öl, im Dämpfungshohlraum bzw. Spalt erreicht wird. Dadurch baut sich ein gleichmäßiger Dämpfungsdruck bzw. -film im Dämpfungshohlraum auf (verbesserte bzw. gleichmäßige Dämpfungsdruckverteilung), welcher neben der damit erreichten Dämpfungswirkung hinaus auch eine Zentrierung des Zwischenelements bzw. des Wälzlagers im Gehäuseteil bewirkt.

Ferner wird weiter bei der Erfindung in vorteilhafter Weise durch den erreichbaren gleichmäßigen Fluss des Dämpfungsmediums und damit durch die dadurch ermöglichte zusätzliche Abfuhr der Reibungswärme eine - neben der durch das Kühlsystem an der ersten Kontaktzone - zusätzliche Kühlung des Wälzlagers realisiert.

In einer bevorzugten Ausgestaltung kann die Dämpfungsausnehmung durch mindestens eine in dem Gehäuseteil und/oder in dem Zwischenelement umlaufende Nut ausgebildet sein. Ferner ist es möglich, die Dämpfungsausnehmung in Ausgestaltung als mindestens eine in dem Gehäuseteil und/oder in dem Zwischenelement angeordnete Tasche zu realisieren. Bevorzugt werden hierbei mehrere solche Taschen in Umfangsrichtung gleichmäßig in dem Gehäuseteil und/oder in dem Zwischenelement eingebracht.

Bei dem Dämpfungsmedium handelt es sich bevorzugt um ein Dämpfungsfluid bzw. Dämpfungsflüssigkeit, insbesondere um eine hochviskose Flüssigkeit, beispielsweise um ein entsprechendes Öl. Je höher die Viskosität der Dämpfungsflüssigkeit ist, desto stärker ist gewöhnlich die erzielbare Dämpfung. Welche Dämpfungsflüssigkeit mit welcher Viskosität letztlich gewählt wird, hängt wesentlich von der Anwendungsumgebung des Lagersystems ab. Hierbei werden z.B. Faktoren, wie z.B. die erzielten Betriebstemperaturen, die Art des Umgebungsmediums, eine Drehzahlbelastung des Lagers bzw. Lagermoduls, ein gewünschtes Dämpfungsvermögen etc. berücksichtigt. Entsprechendes gilt für das Kühlmittel, für welches bevorzugt ein Kühlöl verwendet wird.

Was die Füllung des Dämpfungshohlraumes bzw. Spalts mit dem Dämpfungsmedium, insbesondere mit der Dämpfungsflüssigkeit, angeht, kann prinzipiell vorgesehen sein, dass die Dämpfungsflüssigkeit statisch in dem Dämpfungshohlraum bzw. Spalt verbleibt, also insbesondere kein dynamischer Austausch oder Durchfluss der Dämpfungsflüssigkeit vorgesehen ist. Dazu ist der Dämpfungshohlraum beispielsweise mittels entsprechender Dichtelemente, z.B. mittels Dichtringe, welche in am Außenumfang des Zwischenelements und/oder in am Innenumfang des Gehäuseteils angebrachten Nuten eingebracht werden können, gegenüber der Umgebung abgedichtet.

Häufig ist es jedoch von Vorteil, den Dämpfungshohlraum in dem vorgenannten Sinn nicht stetig mit der Dämpfungsflüssigkeit anzufüllen, sondern z.B. einen gezielten Durchfluss der Dämpfungsflüssigkeit vorzusehen.

Hierzu ist in einer bevorzugten Ausgestaltungsvariante in das Gehäuseteil und/oder das Zwischenelement eine einer Anzahl der Dämpfungsausnehmungen entsprechende Anzahl von Zuläufen eingebracht, wobei über den oder jeden Zulauf die Dämpfungsflüssigkeit unter Druck und insbesondere mit konstanter Menge in den Dämpfungshohlraum bzw. Spalt eingebracht wird.

Mit der "Menge" ist hier die Dämpfungsflüssigkeits-Menge angesprochen, und kann sowohl als Flüssigkeitsmasse, als auch als Flüssigkeitsvolumen definiert sein. Die Zuläufe sind beispielsweise als Kanäle, Bohrungen oder einfache Öffnungen in das Gehäuseteil und/oder Zwischenelement eingebracht. Über die entsprechenden Zuläufe wird die Dämpfungsflüssigkeit gezielt in den Dämpfungshohlraum gepumpt, so dass dieser jeweils gezielt mit einer konstanten Menge an Dämpfungsflüssigkeit durchspült wird.

Für einen Ablauf der Dämpfungsflüssigkeit ist ein entsprechender Ablauf bzw. sind entsprechende Abläufe vorgesehen, beispielsweise auch in Form von in das Gehäuseteil und/oder Zwischenelement eingebrachten Kanälen, Bohrungen oder einfache Öffnungen. Damit ist es möglich, über die Zuläufe und die Abläufe einen Dämpfungsflüssigkeits-Kreislauf, welcher auch zur Kühlung des Lagers bzw. Lagermoduls beiträgt, zur realisieren. Diese Variante ist v.a. hinsichtlich wirtschaftlicher Überlegungen besonders interessant. Alternativ kann es aber auch vorgesehen sein, eine gezielte Dämpfungsflüssigkeits-Leckage, beispielsweise durch geschlitzte Dichtungs- bzw. Sperrringe, geschaffen werden. In diesem Fall kann die Dämpfungsflüssigkeit z.B. in eine Ölwanne, einen sog. Ölsumpf, abgeführt werden.

Die Dämpfungsflüssigkeit wird über den bzw. die Zuläufe mit konstanter Menge in den Dämpfungshohlraum bzw. Spalt eingebracht, d.h. insbesondere dass die Menge der Dämpfungsflüssigkeit in dem Dämpfungshohlraum bzw. Spalt konstant gehalten wird. Dazu umfasst der bzw. umfassen die einzelnen Zuläufe beispielsweise entsprechende Düsen. Durch das Einbringen der konstanten Menge an Dämpfungsflüssigkeit in den Spalt führt beispielsweise eine Verengung des Spaltes aufgrund einer Verdrehung zu einer automatischen lokalen Erhöhung des Drucks in der Dämpfungsflüssigkeit, was letztlich einer Einengung des Spaltes entgegenwirkt. Letztlich wird in dieser Ausgestaltungsvariante insbesondere die berührungslose Lagerung sowie eine automatische Zentrierung des Wälzlagers weiter begünstigt.

Durch die, wie bevorzugt vorsehbare, Einbringung der Dämpfungsflüssigkeit über die in dem Gehäuseteil und/oder in dem Zwischenelement eingebrachte Taschen, wird die Dämpfungsflüssigkeit nicht direkt in den Dämpfungshohlraum bzw. Spalt eingebracht, sondern stattdessen zunächst, ähnlich wie bei einem hydrostatischem Lager, in die entsprechenden Taschen eingespeist. Hierbei kann jede der Taschen durch einen einzelnen Zulauf mit Dämpfungsflüssigkeit gespeist werden. Alternativ kann es auch vorgesehen sein, jede der Taschen durch eine beliebige Anzahl von Zuläufen mit der Dämpfungsflüssigkeit zu speisen.

Die Taschen sind zweckmäßigerweise gleichmäßig verteilt entlang des Spaltes angeordnet. In den Taschen, welche im Wesentlichen nur zu dem Spalt hin durchlässig sind, baut sich ein Abgabedruck für die Dämpfungsflüssigkeit auf, wodurch letztlich eine entsprechende Abgabe der Dämpfungsflüssigkeit über die Taschen in den Spalt vorteilhaft gewährleistet wird.

Vorzugsweise ist ein Dämpfungsflüssigkeits-Durchfluss des oder jeden Zulaufs regulierbar. Der Dämpfungsflüssigkeits-Durchfluss, kurz "Durchfluss" ist insbesondere als die Dämpfungsflüssigkeits-Menge definiert, welche einen Durchflussquerschnitt der Zulauföffnung je Zeiteinheit durchfließt. Die Menge kann hierbei sowohl als Flüssigkeitsmasse, als auch als Flüssigkeitsvolumen definiert sein. Die Regulierung des Durchflusses geschieht zweckmäßigerweise mittels eines entsprechenden Durchflussbegrenzers. Durchflussbegrenzer finden auf verschiedenen technischen Gebieten Anwendung, so dass hier auf eine bewährte Technik zurückgegriffen werden kann. Ein entsprechender Durchflussbegrenzers kann mitunter unter einem sehr hohen Systemdruck arbeiten, beispielsweise 100 bar. Mittels eines derartigen Systemdrucks ist es möglich, den gewählten Durchfluss auch bei einer sehr hohen Betriebslast des Lagermoduls zu gewährleisten. Allgemein gilt, dass der Durchfluss korreliert ist mit einer Strömungsgeschwindigkeit der abgegebenen Dämpfungsflüssigkeit und damit letztlich mit einem hydrodynamischen Druck dieser. Somit lässt sich über die Durchflussmenge letztlich ein Druck der Dämpfungsflüssigkeit in dem Spalt regulieren, wodurch letztlich die Härte der Dämpfung reguliert werden kann.

Vorzugsweise ist eine Durchflussmenge auch in Hinblick auf eine Kühlung des Lagers und/oder des Gehäuseteils regulierbar. Wälzlager, welche insbesondere unter einer hohen Betriebslast laufen benötigen in der Regel eine ausreichende Kühlung. In dieser Ausführungsform wird vorteilhaft die Durchflussmenge an Dämpfungsflüssigkeit insbesondere auch in Hinblick auf eine - neben der durch das Kühlsystem an der ersten Kontaktzone - zusätzliche Kühlung des Lagermoduls variiert. Je stärker die benötigte Kühlung ist, desto höher ist hierbei die Durchflussmenge zu wählen. Insgesamt ist es also über die Regulierung der Durchflussmenge möglich, sowohl die Härte der Dämpfung, als auch die Kühlung des Lagermoduls gezielt zu steuern. Der Durchfluss der einzelnen Zuläufe wird hierbei zweckmäßigerweise jeweils konstant gehalten.

Vorteilhafterweise stimmt der Dämpfungsflüssigkeits-Durchfluss der einzelnen Zuläufe untereinander im Wesentlichen überein. Hierdurch kann auf einfache Weise insbesondere eine konstante Menge an Dämpfungsflüssigkeit in dem entsprechenden Spalt realisiert werden. Dadurch wird gewissermaßen eine "hydrostatische Lagerung" des Lagermoduls in dem Hohlraum realisiert.

Vorzugsweise kann vorgesehen sein, dass die Kühlausnehmung mindestens eine in dem Wälzlageraußenring und/oder in dem Zwischenelement angeordnete, Nut, insbesondere spiralförmige Nut, ist.

Weiterhin ist von Vorteil, dass in dem Wälzlageraußenring und/oder das Zwischenelement mindestens ein Kühlmittelzulauf und ein Kühlmittelablauf angeordnet sind, welche mit der Kühlausnehmung in einer Durchflußverbindung stehen. Insbesondere kann es hier von Vorteil sein, der Kühlmittelzulauf und der Kühlmittelablauf an dem Zwischenelement angeordnet sind, wodurch die als spiralnutförmige, an dem Zwischenelement ausgebildete Kühlausnehmung mit dem Kühlmittel durchströmbar ist.

Die Regulierung der Durchflußmenge des Kühlmittel kann entsprechend - wie obig beschriebene - der des Dämpfungsmediums sein.

Ein derartiges kombiniertes Dämpf-Kühl-System wie bei der Erfindung ermöglicht es insbesondere, dass die erfindungsgemäße Wälzlageranordnung bevorzugt zur Anwendung in einem Hochleistungswälzlager, insbesondere bei einer Hauptwellenlagerung in hochdrehenden Gasturbinen, Getrieben oder für Rotorlagerungen in Hubschraubern, eingesetzt werden kann.

In weiterer Ausgestaltung der Erfindung kann vorgesehen sein, eine Außenkontur des Zwischenelements und eine Innenkontur bzw. Hohlraumwandung des Gehäuseteils, in welcher das Zwischenelement - bis auf den Dämpfungshohlraum bzw. den Spalt - passgenau eingesetzt ist, zueinander verdrehsicher auszugestalten. Dazu sind das Zwischenelement und die Hohlraumwandung insbesondere mit einer "verdrehsichernden Form" ausgestaltet.

Das heißt also, dass eine Verdrehung des Zwischenelements gegenüber dem Gehäuseteil automatisch und allein durch die Hohlraumwandung "mechanisch" gestoppt würde. Dazu kann die Außenkontur des Zwischenelements und die Hohlraumwandung insbesondere eine unrunde Form aufweisen. Für eine derartige unrunde Form weist die Außenkontur beispielsweise radiale Ausstülpungen auf, welche in komplementär dazu ausgebildete Einstülpungen der Hohlraumwandung greifen. Es ist auch möglich, dass die Außenkontur und die Hohlraumwandung in einer anderweitigen Form ausgebildet sind, beispielsweise in einer ovalen Form oder in einer Sternform.

In einer vorteilhaften Ausgestaltung sind die Außenkontur und die Hohlraumwandung jeweils als eine Mehrkantform gegeben. Dies ist produktionstechnisch besonders einfach zu realisieren.

Der verdrehsichernde Effekt an sich ist schon allein über die Formgebung des Gehäuseteils und des Außenelements gewährleistet. Durch die Füllung des Spalts mit der vorzugsweise hochviskosen Dämpfungsflüssigkeit wird zusätzlich noch eine Verdrehsicherung im Sinne einer berührungslosen Verdrehsicherung erreicht. Dies erklärt sich insbesondere so: Eine Verdrehung des Außenelements in dem Hohlraum führte aufgrund der "verdrehsichernden Formen" der Hohlraumwandung und der Außenkontur zu einer lokalen Verengung des Spalts. Dies wiederum resultierte insbesondere in einer lokalen Erhöhung des Drucks, in der vorzugsweise hochviskosen Dämpfungsflüssigkeit, was letztlich einer Einengung des Spaltes entgegen wirkt. Somit kann letztlich eine im Wesentlichen konstante Spaltweite des Spaltes erreicht werden. Das heißt zum einen, dass mittels des flüssigkeitsbefüllten Spaltes ein "mechanischer" Kontakt des Außenelements zu der Hohlraumwandung verhindert werden kann. Zum anderen kann damit eine automatische Zentrierung des Lagermoduls in dem Hohlraum des Gehäuseteils erreicht werden. Es wird also eine berührungslose Verdrehsicherung und zugleich eine berührungslose und insbesondere auch zentrierende Lagerung des Lagermoduls in dem Gehäuseteil zur Verfügung gestellt.

Weitere Arten der Verdrehsicherungen über eine anderweitige Befestigung des Zwischenelements an dem Gehäuseteil, beispielsweise durch eine Verflanschung, sind möglich und im Allgemeinen bekannt.

Ausführungsbeispiele der Erfindung werden nachfolgend anhand von Figuren beschrieben. Dabei zeigen:
- Fig. 1:: einen Ausschnitt eines Lagersystems in einer Querschnittsdarstellung gemäß einem Ausführungsbeispiel,
- Fig. 2:: einen Ausschnitt eines Lagersystems in einer Querschnittsdarstellung gemäß einem Ausführungsbeispiel,
- Fig. 3:: einen Ausschnitt eines Lagersystems in einer Querschnittsdarstellung gemäß einem Ausführungsbeispiel,
- Fig. 4:: einen Ausschnitt eines Lagersystems in einer Querschnittsdarstellung gemäß einem Ausführungsbeispiel,
- Fig. 5:: einen Ausschnitt eines Lagersystems in einer Querschnittsdarstellung gemäß einem Ausführungsbeispiel,
- Fig. 6:: einen Ausschnitt eines Lagersystems in einer Querschnittsdarstellung gemäß einem Ausführungsbeispiel,
- Fig. 7:: einen Ausschnitt eines Lagersystems in einer Querschnittsdarstellung gemäß einem Ausführungsbeispiel,
- Fig. 8:: einen Ausschnitt eines Lagersystems in einer Querschnittsdarstellung gemäß einem Ausführungsbeispiel.

### Ausführliche Beschreibung der Zeichnung

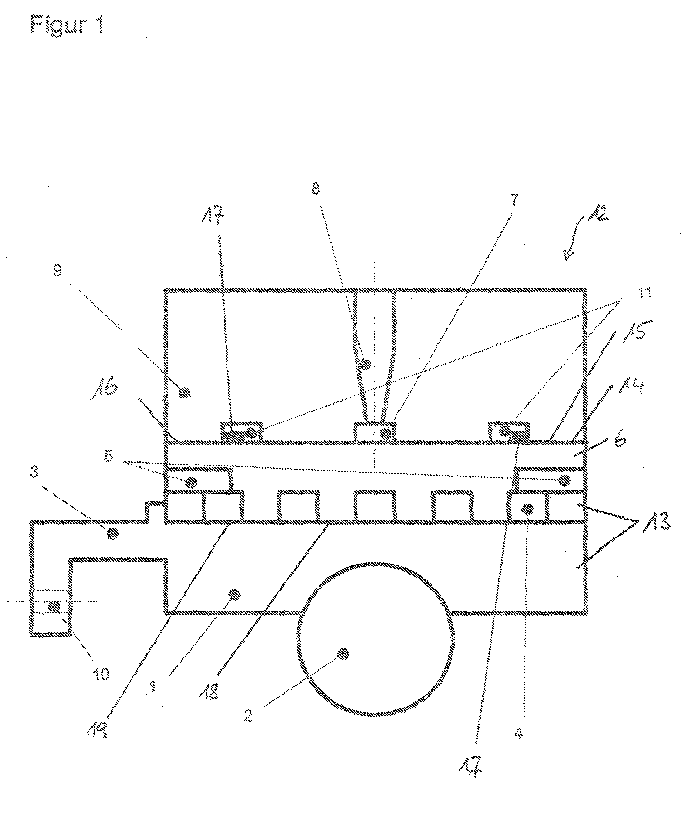

Aus Figur 1 ist in einem axialen Querschnitt eine Wälzlageranordnung bzw. (im Folgenden) ein Lagersystem 12 mit einem kombinierten Kühl-Dämpfungs-System zu entnehmen. Das Lagersystem 12 ist insbesondere im Rahmen einer Triebwerkslagerung vorgesehen.

Gemäß der Darstellung umfasst das Lagersystem 12 ein Lagermodul 13 aus einem Wälzlager (dargestellt mit einem Wälzkörper 2 und einem Wälzlageraußenring 1) und aus einem Umring 6 sowie ein Gehäuseteil 9. Das Lagermodul 13 bzw. der Umring 6 ist hierbei in einen Hohlraum des Gehäuseteils 6 eingesetzt. Das Lagermodul 13 selbst umfasst wie dargestellt einen Wälzlageraußenring 1 sowie Wälzkörper 2, auf welchen Wälzlageraußenring 1 der Umring 6 aufgepresst ist. Der Wälzlageraußenring 1 ist weiter mit Federstäben 3 bzw. mit einem Flansch 3, welcher eine Flanschbohrung 10 aufweist, ausgebildet.

Wie aus Figur 1 hervorgeht, ist der Umring 6 entlang einer Außenkontur 15 passgenau bis auf einen umlaufenden Spalt 14 zu einer Hohlraumwandung 16 in den Hohlraum eingesetzt.

Die Außenkontur 15 des Umrings 6 sowie die Hohlraumwandung 16 sind zueinander verdrehsicher ausgestaltet (nicht dargestellt). Dazu sind die Außenkontur 15 und die Hohlraumwandung 16 jeweils mit einer "verdrehsichernden Form" ausgebildet.

Der Spalt 14, welcher zwischen der Hohlraumwandung 16 und der Außenkontur 15 des Umrings 6 ausgebildet ist, ist mit einer Dämpfungsflüssigkeit gefüllt und ist mit dieser insbesondere durchströmt. Durch die Dämpfungsflüssigkeit wird u.a. eine Verdrehung des Umrings 6 in dem Hohlraum 14 zusätzlich erschwert: Eine Verdrehung des Umrings 6 in dem Hohlraum 14 führte aufgrund der "verdrehsichernden Form" zu einer lokalen Verengung des Spalts 14. Eine derartige lokale Verengung resultiert im Allgemeinen in einer lokalen Erhöhung des Drucks in der insbesondere hochviskosen Dämpfungsflüssigkeit, welche letztlich einer Einengung des Spaltes 14 entgegen wirkt. Somit kann eine im Wesentlichen konstante Spaltweite des Spaltes 14 erreicht werden, was letztlich einen "mechanischen" Kontakt des Umrings 6 zu der Hohlraumwandung 16 verhindert und zusätzlich eine automatische Zentrierung des Lagermoduls 13 in dem Hohlraum 14 ermöglicht.

Insgesamt wird also mittels des Lagersystems 12 bzw. des Umrings 6 eine Dämpfung sowie berührungslose Verdrehsicherung und zugleich eine berührungslose und insbesondere auch zentrierende Lagerung des Lagermoduls 13 in dem Gehäuseteil 9 gewährleistet.

Die Dämpfungsflüssigkeit wird über einen Zulauf 8, welcher im Wesentlichen in Richtung auf die Drehachse zu orientiert und als Bohrung im Wälzlageraußenring 1 ausgebildet ist, abgegeben. Der Zulauf mündet in eine an der Hohlraumwandung bzw. an der Innenkontur 16 des Gehäuseteils 9 eingebrachten, umlaufenden Nut 7.

Über die Nut 7 wird letztlich die Dämpfungsflüssigkeit in den Spalt 14 abgegeben, derart dass ein hydrostatischer Druck der Belastung des Lagersystems 12 entsprechend gewährleistet wird.

Über den Zulauf 8 wird die Dämpfungsflüssigkeit mit konstanter Menge in die Nut 7 des Spalts 14 abgegeben. Für einen Ablauf der Dämpfungsflüssigkeit sind weitere, an der Hohlraumwandung bzw. Innenkontur 16 des Gehäuseteils 9 eingebrachte, umlaufende Nuten 11, in welche geschlitzte Sperrringe 17 eingesetzt sind, vorgesehen. Dadurch wird eine gezielte Dämpfungsflüssigkeits-Leckage geschaffen.

Zur Regulierung eines Dämpfungsflüssigkeits-Durchflusses des Zulaufs 8 ist ein entsprechende Durchflussbegrenzer vorgesehen. Der Dämpfungsflüssigkeits-Durchfluss, oder kurz "Durchfluss" ist hier insbesondere als das Dämpfungsflüssigkeits-Volumen definiert, welches einen Durchflussquerschnitt der Zulauföffnung je Zeiteinheit durchfließt.

Mittels der besagten Durchflussbegrenzer ist es möglich, unter einem sehr hohen Systemdruck von beispielsweise 100 bar zu arbeiten. Mit einem derartig hohen Systemdruck ist es insbesondere möglich, einen gewählten Durchfluss auch bei einer sehr hohen Betriebslast des Lagermoduls 13 zu gewährleisten, so dass insbesondere auch bei einer hohen Betriebslast eine "hydrostatische Lagerung" des Lagermoduls 13 in dem Hohlraum 14 realisiert werden kann.

An einer Innenkontur 18 des Umrings 6 ist - in Form einer Nut - ein spiralförmiger Kühlkanal 4 eingebracht. Das Kühlmittel wird über einen Zulauf, welcher als eine im Wesentlichen koaxial zur die Drehachse orientierte Bohrung 5 ausgebildet ist, abgegeben. Der Zulauf 5 mündet in den Kühlkanal 4, über welchen das Kühlmittel mit konstanter Menge in den Kühlkanal 4 strömt. Für einen Ablauf des Kühlmittels ist ein Ablauf, in welchen wiederum der Kühlkanal 4 mündet, vorgesehen. Dieser Ablauf ist ebenfalls als eine im Wesentlichen koaxial zur die Drehachse orientierte Bohrung 5 ausgebildet.

Damit wird in effektiver Weise die aufgrund der Reibleistung bei den außerordentlich hohen Umdrehungszahlen erzeugte Reibleistung abgeführt.

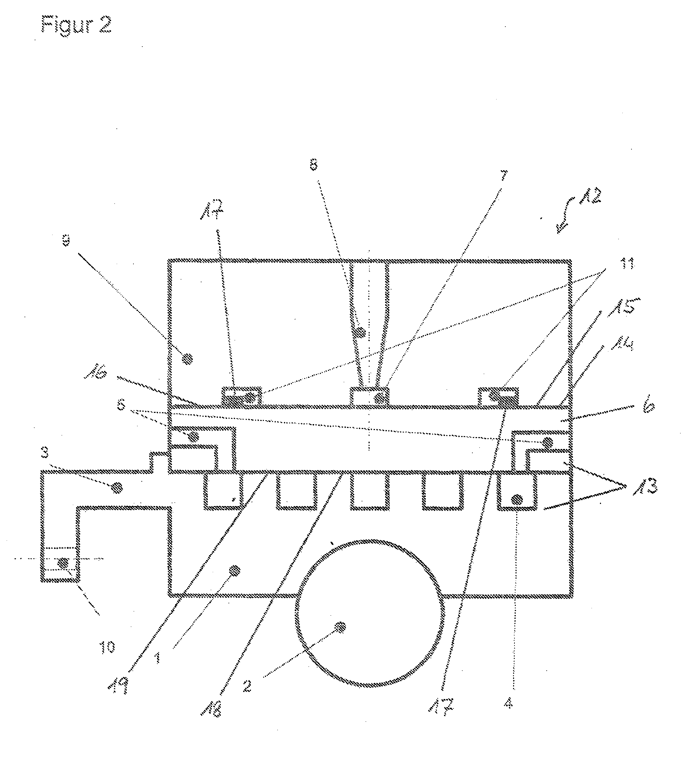

Aus den Figuren 2 bis 8 sind weitere, in ihrem jeweiligen (grundsätzlichen) Aufbau (aus Lagermodul, Umring 6, Gehäuseteil 9) und Funktion (kombiniert gekühltes, gedämpftes Wälzlager) dem in Figur 1 dargestellten Lagersystem 12 entsprechende Lagersysteme 12 zu entnehmen. Soweit Merkmale dieser weiteren Lagersysteme 12 im Folgenden keine Erwähnung finden, sind diese entsprechend denen des Lagersystems 12 gemäß Figur 1 ausgebildet.

Das in Figur 2 dargestellt Lagersystem 12 zeigt den Wälzlageraußenring 1, in welchen gemäß dieser Ausgestaltung der spiralförmige Kühlkanal 4 eingebracht ist. Die Zuführung sowie die Abführung des Kühlmittels erfolgt über den Zulauf bzw. Ablauf am Umring 6.

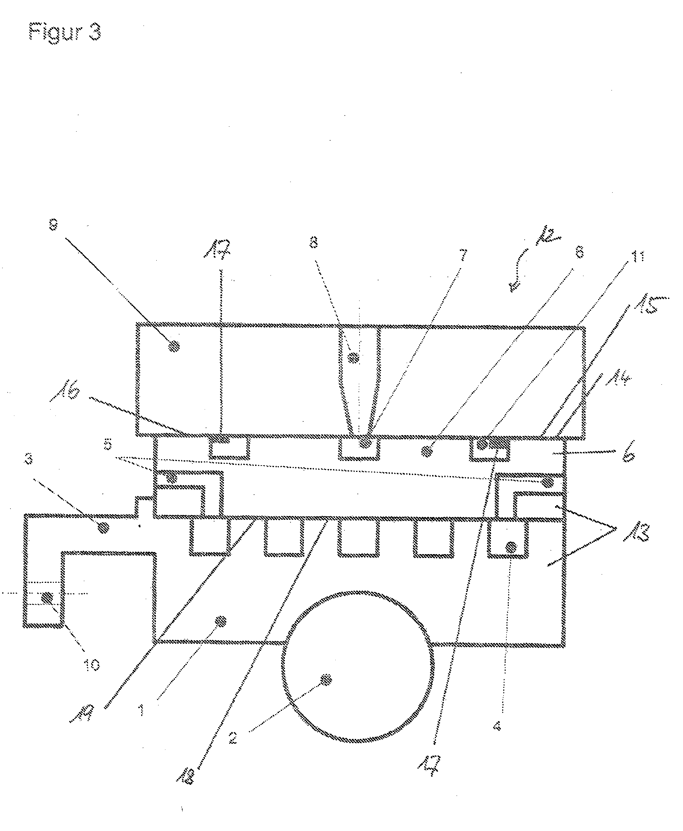

Figur 3 zeigt das Lagersystem 12, bei welchem die Nut 7 des Dämpfungssystems sowie die die Sperrringe aufnehmenden Nuten 11 des Dämpfungssystems an der Außenkontur 15 des Umrings 6 angeordnet sind. Auch hier wird die Dämpfungsflüssigkeit über den Zulauf 8 im Gehäuseteil 9, welcher Zulauf 8 in der umlaufenden Nut 7 mündet, abgegeben. Weiterhin zeigt Figur 3 den Wälzlageraußenring 1, in welchen gemäß dieser Ausgestaltung der spiralförmige Kühlkanal 4 eingebracht ist. Die Zuführung sowie die Abführung des Kühlmittels erfolgt über den Zulauf bzw. Ablauf am Umring 6.

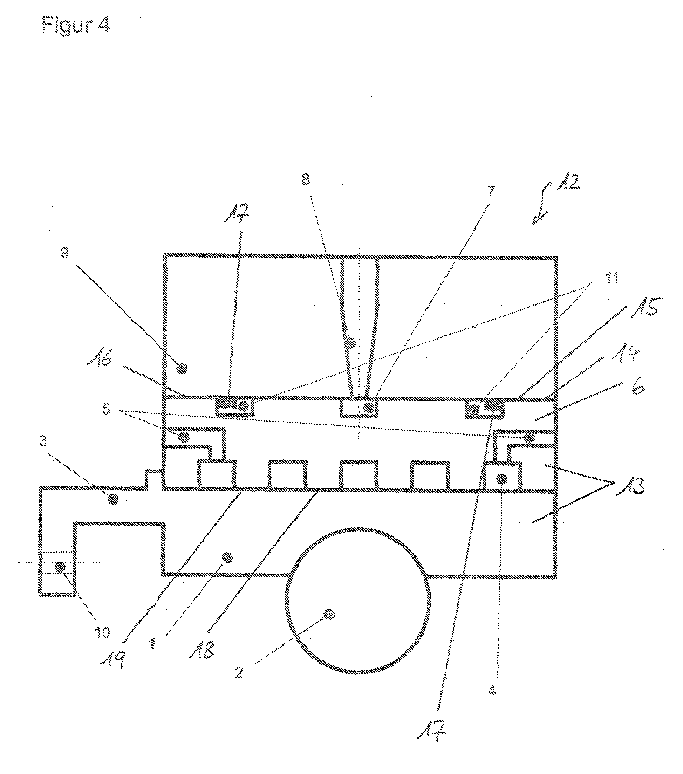

Das in Figur 4 dargestellte Lagersystem 12 zeigt gemäß dieser Ausgestaltung den Umring 6, an dessen Außenkontur 15 die Nut 7 des Dämpfungssystems sowie die die Sperrringe aufnehmenden Nuten 11 des Dämpfungssystems angeordnet sind. Auch hier wird die Dämpfungsflüssigkeit über den Zulauf 8 im Gehäuseteil 9, welcher Zulauf 8 in der umlaufenden Nut 7 mündet, abgegeben.

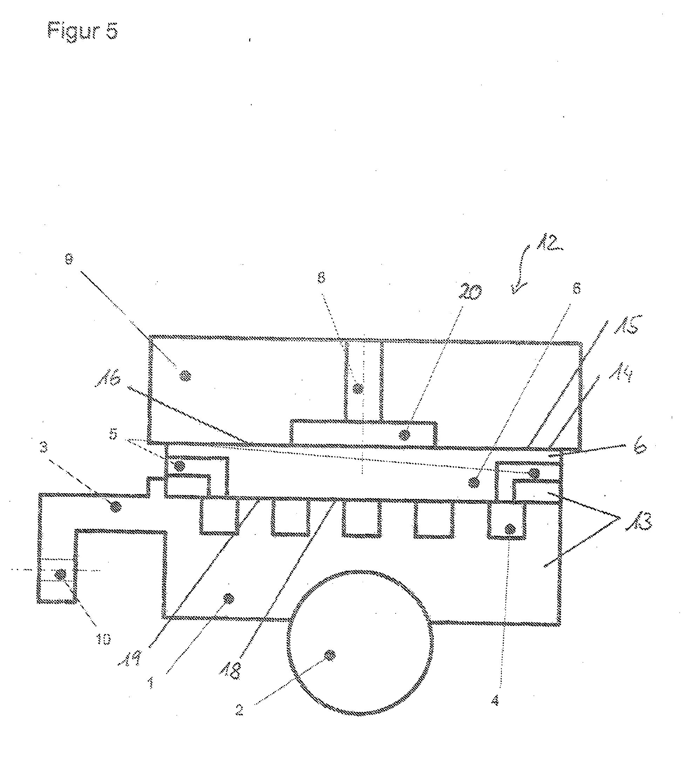

Aus Figur 5 ist das Lagersystem 12 mit dem kombinierten Kühl-DämpfungsSystem zu entnehmen, bei welchem die Dämpfungsflüssigkeit über mehrere an der Hohlraumwandung bzw. an der Innenkontur 16 des Gehäuseteils 9 eingebrachte, in Umfangsrichtung gleichmäßig verteilte Öltaschen 20 in den Spalt 14 einströmt. Figur 5 zeigt - als Schnittdarstellung - nur eine solche Öltasche 20, deren - nicht dargestellte - mehrere, beispielsweise 4 bis 6, Öltaschen 20 sich in Umfangsrichtung gleichmäßig verteilen. Die Versorgung der Öltaschen 20 erfolgt über entsprechende Zuläufe 8, welche - in ihrer Anzahl der Anzahl der Öltaschen 20 entsprechend - als Bohrungen im Gehäuseteil 9 ausgebildet sind und jeweils in der zugehörigen Öltasche 20 münden. Weiterhin zeigt das in Figur 5 dargestellte Lagersystem 12 den Wälzlageraußenring 1, in welchen gemäß dieser Ausgestaltung der spiralförmige Kühlkanal 4 eingebracht ist. Die Zuführung sowie die Abführung des Kühlmittels erfolgt über den Zulauf 5 bzw. Ablauf 5 am Umring 6.

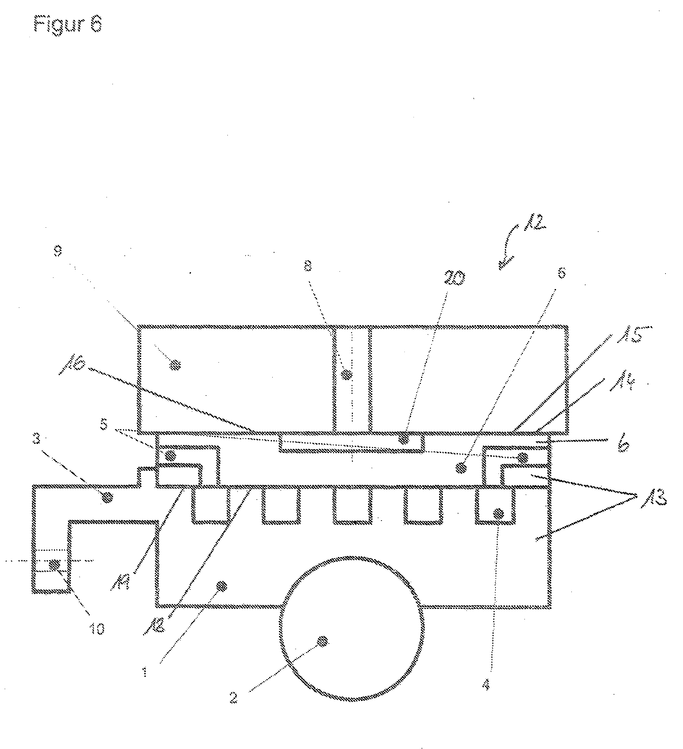

Figur 6 zeigt das Lagersystem 12 mit dem Wälzlageraußenring 1, in welchen gemäß dieser Ausgestaltung der spiralförmige Kühlkanal 4 eingebracht ist. Die Zuführung sowie die Abführung des Kühlmittels erfolgt über den Zulauf 5 bzw. Ablauf 5 am Umring 6. Weiterhin ist Figur 6 zu entnehmen, dass die Dämpfungsflüssigkeit gemäß dieser Ausgestaltung über mehrere an der Außenkontur 15 des Umrings 6 eingebrachte, in Umfangsrichtung gleichmäßig verteilte Öltaschen 20 in den Spalt 14 einströmt. Figur 6 zeigt - als Schnittdarstellung - ebenfalls nur eine solche Öltasche 20, deren - nicht dargestellte - mehrere sich in Umfangsrichtung gleichmäßig verteilen. Die Versorgung der Öltaschen 20 erfolgt über entsprechende Zuläufe 8, welche - in ihrer Anzahl der Anzahl der Öltaschen 20 entsprechend - als Bohrungen im Gehäuseteil 9 ausgebildet sind und jeweils in der zugehörigen Öltasche 20 münden.

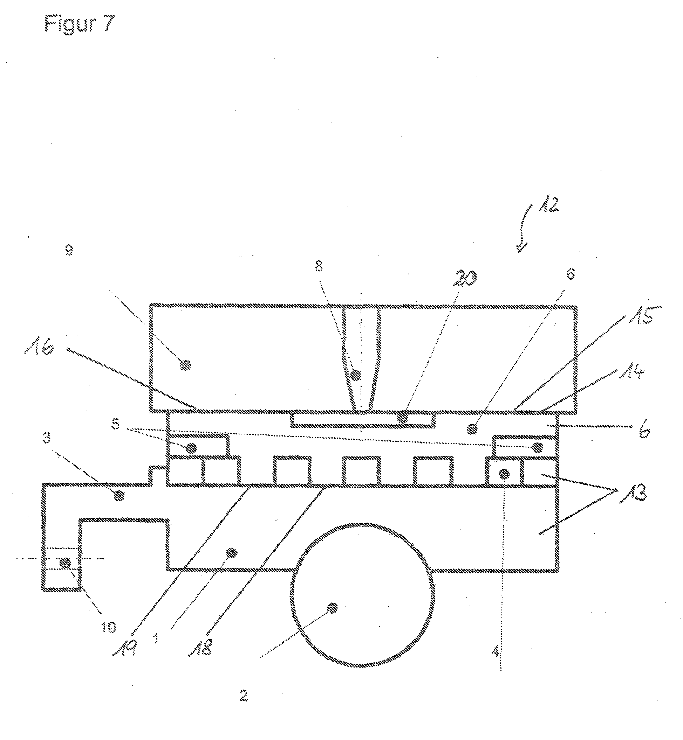

Aus Figur 7 ist das Lagersystem 12 mit dem kombinierten Kühl-DämpfungsSystem in der Ausgestaltung zu entnehmen, bei welcher die Dämpfungsflüssigkeit über mehrere an der Außenkontur 15 des Umrings 6 eingebrachte, in Umfangsrichtung gleichmäßig verteilte Öltaschen 20 in den Spalt 14 einströmt. Figur 7 zeigt - als Schnittdarstellung - ebenfalls nur eine solche Öltasche 20, deren - nicht dargestellte - mehrere sich in Umfangsrichtung gleichmäßig verteilen. Die Versorgung der Öltaschen 20 erfolgt über entsprechende Zuläufe 8, welche - in ihrer Anzahl der Anzahl der Öltaschen 20 entsprechend - als Bohrungen im Gehäuseteil 9 ausgebildet sind und jeweils in der zugehörigen Öltasche 20 münden.

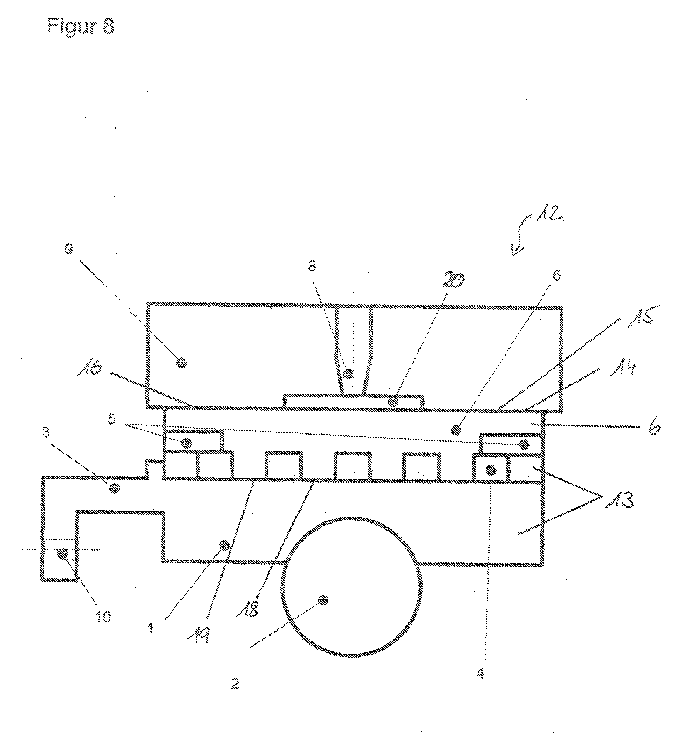

Figur 8 zeigt das Lagersystem 12, bei welchem die Dämpfungsflüssigkeit über mehrere an der Hohlraumwandung bzw. an der Innenkontur 16 des Gehäuseteils 9 eingebrachte, in Umfangsrichtung gleichmäßig verteilte Öltaschen 20 in den Spalt 14 einströmt. Figur 8 zeigt - als Schnittdarstellung - nur eine solche Öltasche 20, deren - nicht dargestellte - mehrere Öltaschen 20 sich in Umfangsrichtung gleichmäßig verteilen. Die Versorgung der Öltaschen 20 erfolgt über entsprechende Zuläufe 8, welche - in ihrer Anzahl der Anzahl der Öltaschen 20 entsprechend - als Bohrungen im Gehäuseteil 9 ausgebildet sind und jeweils in der zugehörigen Öltasche 20 münden.

### Bezugszeichen

- 1: Wälzlager- bzw. Lageraußenring
- 2: Wälzkörper
- 3: Federstäbe, Flansch
- 4: Kühlkanal, z.B. spiralförmig
- 5: Kühlölzufuhr/Zulauf und Kühlölabfuhr/Ablauf
- 6: Umring
- 7: umlaufende Nut / Tasche
- 8: Dämpferölzuführung, Zulauf
- 9: Gehäuse bzw. Gehäuseteil
- 10: Flanschbohrung
- 11: Nut mit Dichtungsring / Sperrring
- 12: Wälzlageranordnung, Lagersystem
- 13: Lagermodul
- 14: Spalt
- 15: Außenkontur (des Umrings 6)
- 16: Hohlraumwandung, Innenkontur des Gehäuseteils 9
- 17: Dichtringe, Sperrringe
- 18: Innenkontur (des Umrings 6)
- 19: Außenkontur (des Wälzlageraußenrings 1)
- 20: Öltasche

## Patentansprüche

1. Wälzlageranordnung (12) mit zumindest einem Wälzlageraußenring (1) eines Wälzlagers, einem Zwischenelement und einem Gehäuseteil (9), wobei das Wälzlager derart in das Gehäuseteil (9) einsetzbar ist, dass das Zwischenelement zwischen dem Wälzlageraußenring (1) und dem Gehäuseteil (9) angeordnet ist, wobei sich zwischen dem Wälzlageraußenring (1) und dem Zwischenelement eine erste Kontaktzone ausbildet und sich zwischen dem Zwischenelement und dem Gehäuseteil (9) eine zweite Kontaktzone ausbildet,
- wobei an der ersten Kontaktzone ein Kühlsystem ausgebildet ist,
- wobei das Kühlsystem mindestens eine mit einem Kühlmittel durchströmbare Kühlausnehmung, insbesondere einen Kühlkanal (4), aufweist,
- wobei an der zweiten Kontaktzone ein Dämpfungssystem ausgebildet ist,
- wobei das Dämpfungssystem mindestens eine Dämpfungsausnehmung aufweist, über welche ein Dämpfungshohlraum in der zweiten Kontaktzone mit einem Dämpfungsmedium befüllbar ist.

2. Wälzlageranordnung (12) nach mindestens einem der voranstehenden Ansprüche, bei der die Dämpfungsausnehmung mindestens eine in dem Gehäuseteil (9) und/oder in dem Zwischenelement umlaufende Nut ist.

3. Wälzlageranordnung (12) nach mindestens einem der voranstehenden Ansprüche, bei der die Dämpfungsausnehmung mindestens eine in dem Gehäuseteils (9) und/oder in dem Zwischenelement angeordnete Tasche (7) ist.

4. Wälzlageranordnung (12) nach dem voranstehenden Anspruch, bei der mehrere solcher Taschen (7) in einer Umfangsrichtung gleichmäßig in dem Gehäuseteil (9) und/oder in dem Zwischenelement angeordnet sind.

5. Wälzlageranordnung (12) nach mindestens einem der voranstehenden Ansprüche, bei der das Dämpfungsmedium ein Dämpfungsfluid, insbesondere ein hochviskoses Öl, und/oder das Kühlmittel ein Kühlöl sind bzw. ist.

6. Wälzlageranordnung (12) nach mindestens einem der voranstehenden Ansprüche, bei der in das Gehäuseteil (9) und/oder das Zwischenelement eine einer Anzahl der Dämpfungsausnehmungen entsprechende Anzahl von Zuläufen (8) eingebracht ist, wobei über den oder jeden Zulauf (8) das Dämpfungsmedium unter Druck und insbesondere mit konstanter Menge in den Dämpfungshohlraum, insbesondere unter Verwendung eines Durchflußbegrenzers oder einer Konstantpumpe, einbringbar ist.

7. Wälzlageranordnung (12) nach mindestens einem der voranstehenden Ansprüche, bei der in dem Gehäuseteil (9) und/oder in dem Zwischenelement, insbesondere umlaufende, Ausnehmungen, insbesondere Nuten (7), zur Aufnahme mindestens eines Dichtungs- oder Sperrelements (17) angeordnet sind.

8. Wälzlageranordnung (12) nach mindestens einem der voranstehenden Ansprüche, bei der die Kühlausnehmung mindestens eine in dem Wälzlageraußenring (1) und/oder in dem Zwischenelement angeordnete, spiralförmige Nut ist.

9. Wälzlageranordnung (12) nach mindestens einem der voranstehenden Ansprüchen, bei der in dem Wälzlageraußenring (1) und/oder das Zwischenelement mindestens ein Kühlmittelzulauf (5) und ein Kühlmittelablauf (5) angeordnet sind, welche mit der Kühlausnehmung in einer Durchflußverbindung stehen.

10. Wälzlageranordnung (12) nach dem voranstehenden Anspruch, bei der der Kühlmittelzulauf (5) und der Kühlmittelablauf (5) an dem Zwischenelement angeordnet sind, wodurch die als spiralnutförmige, an dem Zwischenelement ausgebildete Kühlausnehmung mit dem Kühlmittel durchströmbar ist.

11. Wälzlageranordnung (12) nach mindestens einem der voranstehenden Ansprüchen, eingesetzt zur Anwendung in einem Hochleistungswälzlager, insbesondere bei einer Hauptwellenlagerung in hochdrehenden Gasturbinen, Getrieben oder für Rotorlagerungen in Hubschraubern.

## Claims

1. Rolling bearing arrangement (12) comprising at least one rolling bearing outer ring (1) of a rolling bearing, an intermediate element, and a housing part (9), wherein the rolling bearing can be inserted into the housing part (9) such that the intermediate element is arranged between the rolling bearing outer ring (1) and the housing part (9), wherein a first contact zone is formed between the rolling bearing outer ring (1) and the intermediate element, and a second contact zone is formed between the intermediate element and the housing part (9),
- wherein a cooling system is formed on the first contact zone,
- wherein the cooling system has at least one cooling recess, in particular a cooling channel (4), through which a coolant can flow,
- wherein a damping system is formed on the second contact zone, and
- wherein the damping system has at least one damping recess via which a damping cavity in the second contact zone can be filled with a damping medium.

2. Rolling bearing arrangement (12) according to Claim 1, in which the damping recess is at least one groove which runs around in the housing part (9) and/or in the intermediate element.

3. Rolling bearing arrangement (12) according to at least one of the preceding claims, in which the damping recess is at least one pocket (7) arranged in the housing part (9) and/or in the intermediate element.

4. Rolling bearing arrangement (12) according to the preceding claim, in which a plurality of such pockets (7) are arranged in the housing part (9) and/or in the intermediate element in a uniform manner in a circumferential direction.

5. Rolling bearing arrangement (12) according to at least one of the preceding claims, in which the damping medium is a damping fluid, in particular a high-viscosity oil, and/or the coolant is a cooling oil.

6. Rolling bearing arrangement (12) according to at least one of the preceding claims, in which a number of inlets (8) corresponding to a number of the damping recesses is incorporated into the housing part (9) and/or the intermediate element, wherein the damping medium can be introduced, via the or each inlet (8), into the damping cavity under pressure and, in particular, at a constant rate, in particular using a flow limiter or a fixed displacement pump.

7. Rolling bearing arrangement (12) according to at least one of the preceding claims, in which, in particular encircling, recesses, in particular grooves (7), for accommodating at least one sealing or blocking element (17) are arranged in the housing part (9) and/or in the intermediate element.

8. Rolling bearing arrangement (12) according to at least one of the preceding claims, in which the cooling recess is at least one spiral groove arranged in the rolling bearing outer ring (1) and/or in the intermediate element.

9. Rolling bearing arrangement (12) according to at least one of the preceding claims, in which at least one coolant inlet (5) and one coolant outlet (5) are arranged in the rolling bearing outer ring (1) and/or the intermediate element and are in a throughflow connection with the cooling recess.

10. Rolling bearing arrangement (12) according to the preceding claim, in which the coolant inlet (5) and the coolant outlet (5) are arranged on the intermediate element, with the result that the coolant can flow through the cooling recess in the form of a spiral groove that is formed on the intermediate element.

11. Rolling bearing arrangement (12) according to at least one of the preceding claims, used for application in a heavy-duty rolling bearing, in particular in a main-shaft bearing in high-speed gas turbines or gearboxes, or for rotor bearings in helicopters.

## Revendications

1. Agencement de palier à roulement (12) comprenant au moins une bague extérieure de palier à roulement (1) d'un palier à roulement, un élément intermédiaire et une partie de boîtier (9), le palier à roulement pouvant être inséré dans la partie de boîtier (9) de telle sorte que l'élément intermédiaire soit disposé entre la bague extérieure de palier à roulement (1) et la partie de boîtier (9), une première zone de contact étant réalisée entre la bague extérieure de palier à roulement (1) et l'élément intermédiaire, et une deuxième zone de contact étant réalisée entre l'élément intermédiaire et la partie de boîtier (9),
- un système de refroidissement étant réalisé sur la première zone de contact,
- le système de refroidissement comprenant au moins un évidement de refroidissement, en particulier un canal de refroidissement (4), pouvant être traversé par un réfrigérant,
- un système d'amortissement étant réalisé sur la deuxième zone de contact,
- le système d'amortissement comprenant au moins un évidement d'amortissement par le biais duquel un espace creux d'amortissement dans la deuxième zone de contact peut être rempli d'un milieu d'amortissement.

2. Agencement de palier à roulement (12) selon la revendication 1, dans lequel l'évidement d'amortissement est au moins une rainure périphérique dans la partie de boîtier (9) et/ou dans l'élément intermédiaire.

3. Agencement de palier à roulement (12) selon au moins l'une quelconque des revendications précédentes, dans lequel l'évidement d'amortissement est au moins une poche (7) disposée dans la partie de boîtier (9) et/ou dans l'élément intermédiaire.

4. Agencement de palier à roulement (12) selon la revendication précédente, dans lequel plusieurs telles poches (7) sont disposées uniformément dans une direction périphérique dans la partie de boîtier (9) et/ou dans l'élément intermédiaire.

5. Agencement de palier à roulement (12) selon au moins l'une quelconque des revendications précédentes, dans lequel le milieu d'amortissement est un fluide d'amortissement, en particulier une huile à haute viscosité, et/ou le réfrigérant est une huile de refroidissement.

6. Agencement de palier à roulement (12) selon au moins l'une quelconque des revendications précédentes, dans lequel un certain nombre d'entrées (8) correspondant au nombre des évidements d'amortissement sont ménagées dans la partie de boîtier (9) et/ou l'élément intermédiaire, le milieu d'amortissement pouvant être introduit, par le biais de l'entrée ou de chaque entrée (8), sous pression et en particulier à un débit constant, dans l'espace creux d'amortissement, en particulier en utilisant un limiteur de débit ou une pompe à cylindrée constante.

7. Agencement de palier à roulement (12) selon au moins l'une quelconque des revendications précédentes, dans lequel des évidements, en particulier des rainures (7), en particulier périphériques, sont disposés dans la partie de boîtier (9) et/ou dans l'élément intermédiaire, pour recevoir au moins un élément d'étanchéité ou de blocage (17).

8. Agencement de palier à roulement (12) selon au moins l'une quelconque des revendications précédentes, dans lequel l'évidement de refroidissement est au moins une rainure hélicoïdale disposée dans la bague extérieure de palier à roulement (1) et/ou dans l'élément intermédiaire.

9. Agencement de palier à roulement (12) selon au moins l'une quelconque des revendications précédentes, dans lequel au moins une entrée de réfrigérant (5) et une sortie de réfrigérant (5) sont disposées dans la bague extérieure de palier à roulement (1) et/ou l'élément intermédiaire, lesquelles sont en liaison d'écoulement avec l'évidement de refroidissement.

10. Agencement de palier à roulement (12) selon la revendication précédente, dans lequel l'entrée de réfrigérant (5) et la sortie de réfrigérant (5) sont disposées sur l'élément intermédiaire, de telle sorte que l'évidement de refroidissement en forme de rainure hélicoïdale, réalisé sur l'élément intermédiaire, puisse être traversé par le réfrigérant.

11. Agencement de palier à roulement (12) selon au moins l'une quelconque des revendications précédentes, utilisé pour l'application dans un palier à roulement de haute performance, en particulier dans un palier d'arbre principal dans des turbines à gaz à haut régime, des transmissions ou pour des paliers de rotor dans des hélicoptères.
